# EUROPEAN PATENT APPLICATION

(11) **EP 2 570 956 A1**
(43) Date of publication of application: **20.03.2013**
(21) Application number: 10851380.5
(22) Date of filing: 11.05.2010
(51) Int. Cl.: G06F 21/22, G06K 19/00

(54) **EXTERNAL BOOT DEVICE, EXTERNAL BOOT PROGRAM, EXTERNAL BOOT METHOD AND NETWORK COMMUNICATION SYSTEM**

(71) Applicant: Suginaka, Junko, Minato-ku, Tokyo 105-0001 (JP); Yasuda, Hiroshi, Yokohama-shi, Kanagawa 247-0008 (JP)
(72) Inventor: FURUKAWA Yoshihisa, Tokyo 102-0094 (JP)
(74) Representative: Peter, Julian
(86) International application number: PCT/JP2010/057962
(87) International publication number: WO 2011/141997

(57) **Abstract**

A USB memory (2) includes an MBR memory (261), and a distribution processing processor (221). The MBR memory (261) stores an MBR. The MBR is set to start up with higher priority by BIOS of an information processing apparatus and reads a loader to map the loader to a startup memory region of the information processing apparatus. The MBR is a program that position-aligns a stack region in a predetermined stack relationship with an interrupt vector table set in the startup memory region of the information processing apparatus. Prior to a startup of the MBR, the distribution processing processor (221) segments the loader into loader segments of a predetermined number, and generates mapping information in accordance with which the loader segments are loaded to the startup memory region. In this way, the external booting controls activities of malware.

## Description

### Technical Field

The present invention relates to a boot technique of using an external boot device that is mounted on an information processing apparatus including a CPU and boots up the information processing apparatus.

### Background Art

Recently, a variety of computer viruses and the like have entered information processing apparatuses including servers and terminals (such as personal computers) connected to a network such as the Internet, and have hidden there. As a result, data in the information processing apparatus have suffered from various damages including thefts, intercepts, tampering, leaks, and attacks. In response to such computer virus damages, steps are taken to prevent viruses from entering as much as possible. The steps include developing and improving software to detect and nullify viruses, and imposing line constraints (address constraints). However, completely preventing viruses from entering the information processing apparatus seems difficult in view of a time lag from a detection of a new type of virus to a development of software to nullify the virus. It is also likely that the information processing apparatus is infected with a virus during a startup period subsequent to power-on, and an anti-virus step even effective during the startup period is also desired.

Patent Literature 1 describes an OS (Operation System) startup method stored on a hard disk in an information processing apparatus. More in detail, when a switch-on of the information processing apparatus is detected, BIOS (Basic Input/Output System) stored on a flash memory starts up, searches for a boot device that remains bootable, starts up a boot OS stored on a USB (Universal Serial Bus) memory, and first causes display means to display a password input screen. Next, the information processing apparatus receives a password input on the password input screen by input means. Upon receiving the password, the information processing apparatus links the input password to information unique to the USB memory, converts linked input password into a hash value, and then generates a unlock password of a hard disk to be started up. If the information processing apparatus determines that the hard disk to be started up has been security set, the information processing apparatus unlocks the hard disk with the unlock password. If the information processing apparatus determines that the hard disk to be started up has not been security set, the information processing apparatus sets security of the hard disk, starts up MBR (Master Boot Record) of the hard disk in an unlocked state, and starts up a boot loader of the OS. The method of starting up the OS of Patent Literature 1 has been discussed. Security authentication at the OS startup can thus be performed. Patent Literature 1 also describes a virus check of the hard disk that can be performed with the hard disk in an unlocked state using a virus check function stored on the USB memory.

Patent Literature 2 describes an execution method of a startup program. More in detail, the execution method includes a pre-startup process step. In the pre-startup process step, a tentative startup sector storing any optional program such as of security is read prior to a startup sector of a storage medium storing the startup program, in response to a first read request from a personal computer to a hard disk, and the optional program is executed. After the execution of the optional program such as of security is performed, the originally intended startup program is performed and the OS starts up. In this way, the optional program such as of security can be executed prior to the startup of the OS without the need to modify the BOIS of the personal computer and a startup sector (LBAO) of the storage medium.

### Citation List

### Patent Literature

[Patent Literature 1] Japanese Unexamined Patent Application Publication No. 2007-66123
[Patent Literature 2] Japanese Unexamined Patent Application Publication No. 2006-236193

### Summary of Invention

### Technical Problem

The technique described in Patent Literature 1 is a personal authentication technique that links the password to the unique information of the USB memory to generate the hash value as the unlock information out of fear that the password could be thieved in the course of entering the password on the password input screen. Patent Literature 1 also describes the virus check of the hard disk that can be made using the virus check function stored on the USB memory, but fails to give any specific description of the virus check.

On the other hand, according to Patent Literature 2, if the optional program in the tentative startup sector on the hard disk is a virus check program, an unauthorized program having the form of Rootkit, for example, can be started up before the optional program is executed, and can hide itself (unauthorized program) from the optional program. The technique described in Patent Literature 2 is thus subject to a limitation in the reliability of the virus check. Patent Literature 2 describes no specific method at all to monitor a virus before OS startup. Even if it is assumed that a virus hiding from before the power-on can be detected, no virus check is performed after re-start (OS startup), and the computer remains vulnerable to an virus entering at the restart. Patent Literature 1 and 2 provides typical methods that are to be performed on the personal computer side. The techniques described in Patent Literature 1 and 2 are thus subject to a limitation in achieving high reliability from this point of view.

A so-called USB memory boot method such as the startup method described in Patent Literature 1 is known these days. The USB memory boot method is a technique in which BIOS specifies a USB memory with higher priority if a terminal is powered on with the USB memory connected to the terminal, an OS stored on the USB memory boots up, and a terminal in a working place, for example, can thus be used under an originally intended user's own PC environment. In another known application of the USB memory boot method, an anti-virus program is stored and then started up with higher priority so that a virus hiding in the terminal is nullified. However, there is no mention about the presence or absence a virus infection with the USB memory itself, and the presence or absence of a virus intrusion in a period from the end of a virus nullification process to the startup of the OS.

It is an object of the present invention to provide an external boot technique that controls activities of malware such as a computer virus.

It is also an object of the present invention to provide a technique that restarts an information processing apparatus not via BIOS if a fault related to malware is detected during a startup period.

### Solution to Problem

An external boot device of the present invention is an external boot device mounted on an information processing apparatus including a CPU to boot up the information processing apparatus. The external boot device includes storage means that stores MBR, the MBR being set to start up with higher priority by BIOS of the information processing apparatus and reading a loader to map the loader to a startup memory region of the information processing apparatus, the MBR storing a program that position-aligns a stack region in a predetermined stack relationship with an interrupt vector table set in the startup memory region of the information processing apparatus, and distribution processing means that, prior to a startup of the MBR, segments the loader into loader segments of a predetermined number, and generates mapping information in accordance with which the loader segments are loaded to the startup memory region.

A network communication system of the present invention includes the external boot device, and a plurality of the information processing apparatuses connected to a network via the external boot device in a manner that allows communication between the information processing apparatuses and the network.

An external boot program of the present invention is an external boot program of an external boot device including a computer and mounted on an information processing apparatus including a CPU to boot up the information processing apparatus. The external boot program causes the computer operate as storage means that stores MBR, the MBR being set to start up with higher priority by BIOS of the information processing apparatus, reading a loader, and mapping the loader to a startup memory region of the information processing apparatus, the MBR storing a program that position-aligns a stack region in a predetermined stack relationship with an interrupt vector table set in the startup memory region of the information processing apparatus, and distribution processing means that, prior to a startup of the MBR, segments the loader into loader segments of a predetermined number, and generates mapping information in accordance with which the loader segments are loaded to the startup memory region.

An external boot method of the present invention is an external boot method of an external boot device mounted on an information processing apparatus including a CPU to boot up the information processing apparatus. The external boot method includes storing MBR on storage means, the MBR being set to start up with higher priority by BIOS of the information processing apparatus, reading a loader, and mapping the loader to a startup memory region of the information processing apparatus, the MBR having a program that position-aligns a stack region in a predetermined stack relationship with an interrupt vector table set in the startup memory region of the information processing apparatus, and prior to a startup of the MBR, segmenting, with distribution processing means, the loader into loader segments of a predetermined number, and generating mapping information in accordance with which the loader segments are loaded to the startup memory region.

According to the present invention, when the information processing apparatus, such as a personal computer (PC), is powered on with the external boot device such as a USB (Universal Serial Bus) memory mounted thereon, a CPU or the like starts up (boots up) the information processing apparatus so that the information processing apparatus is operative.

The external boot device includes the storage means, and the storage means stores MBR (Master Boot Record) so that the information processing apparatus starts up with higher priority by BIOS of the information processing apparatus. The MBR is a program to read the loader. The MBR has the program that position-aligns the stack region in the predetermined stack relationship with the interrupt vector table set beforehand in the startup memory region of the information processing apparatus. Prior to the startup of the MBR, the distribution processing means segments the loader into the loader segments of the predetermined number, and generates the mapping information in accordance with which the loader segments are loaded to the startup memory region.

The loader segments are therefore loaded to the startup memory region while being appropriately mapped to the startup memory region. On the other hand, if malware, such as a virus, hides in the BIOS (it is noted that a virus body is in a hard disk (HDD)), the virus turns on a trap flag (TF) within an EFLAG register, thereby setting the execution procedure of the program to be in a single-step mode. The virus then sets contents of INT1 in an interrupt vector table at a hiding place of the virus body and then waits on standby. Then, the CPU causes the BOIS to start up, control is handed over to the MBR, and the loader segments start to be loaded. The virus captures control of the CPU from the MBR program at a given point of time in the single step mode. The virus in this way may perform a variety of unauthorized activities including replicating the virus itself, data tampering, data destruction, and data leaks. The stack region is stacked on the interrupt vector table, and the TF is set to be on to record immediately preceding information on the stack region. In this way, if the virus becomes operative, information on the stack region is immediately updated in an update manner such that the content of the interrupt vector table is updated. The updating of the information on the stack region, i.e., the rewriting of the content of the interrupt vector table removes hiding place information of the virus, and the activities of the virus is fully controlled. In this way, the external booting controls the operation of the virus.

The external boot device of the present invention includes monitoring means that monitors whether a fault occurs in a startup operation of the MBR, and restart means that, if the fault is detected, reads the MBR onto the startup memory region of the information processing apparatus.

The external boot program of the present invention causes the computer to operate as monitoring means that monitors whether a fault occurs in a startup operation of the MBR, and restart means that, if the fault is detected, reads the MBR onto the startup memory region of the information processing apparatus.

The external boot method of the present invention includes monitoring with monitoring means whether a fault occurs in a startup operation of the MBR, and reading with restart means, if the fault is detected, the MBR onto the startup memory region of the information processing apparatus.

According to the invention, the monitoring means of the external boot device monitors whether a fault occurs in the startup operation of the MBR. If a fault is detected, the restart means in the external boot device reads (loads) the MBR onto the startup memory region of the information processing terminal. If a hiding virus operates during the startup operation of the BIOS, and causes a fault in the startup operation of the MBR, the fault may be detected. Without restarting the BIOS, the external boot device reads the MBR, and rewrites (resets) the startup memory region with the MBR. The startup memory region is thus cleared. If the malware is detected in this way, the information processing apparatus restarts not via the BIOS. The restart the information processing apparatus removes from the startup memory region the malware related to the BIOS.

### Advantageous Effects of Invention

According to the present invention, activities of malware are controlled by the external boot.

Also according to the present invention, if a fault related to malware is detected during the startup, the information processing apparatus is restarted up not via the BIOS.

### Brief Description of Drawings

FIG. 1 diagrammatically illustrates a network communication system to which an external boot device of an embodiment of the present invention is applied.
FIG. 2 is a block diagram illustrating an example of a hardware configuration of the external boot device of FIG. 1.
FIG. 3 is a block diagram illustrating functional blocks related to the booting of a terminal and the external boot device.
FIG. 4 illustrates a memory map of the terminal.
FIG. 5 illustrates a method of stacking a stack region on an interrupt vector table.
FIG. 6 is a flowchart illustrating a procedure of a startup process of BIOS executed by a CPU of the terminal.
FIG. 7 is a flowchart illustrating a process of a distribution process of a loader executed by a CPU of a USB memory.
FIG. 8 is a flowchart illustrating a procedure of an execution process of MBR executed by the CPU of the terminal.
FIG. 9 is a flowchart illustrating a procedure of a monitoring process executed by the CPU of the USB memory.
FIG. 10 is a flowchart illustrating a procedure of a restart process executed by the CPU of the USB memory.
FIG. 11 is a flowchart illustrating a procedure of a restart process executed by the CPU of the terminal.

### Description of Embodiments

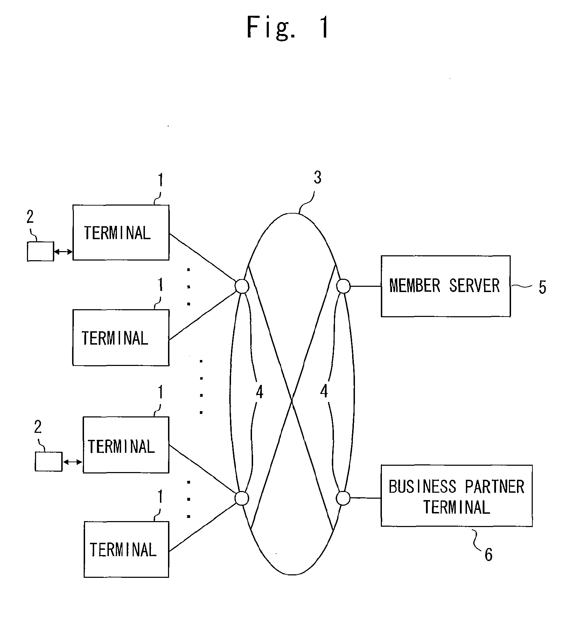

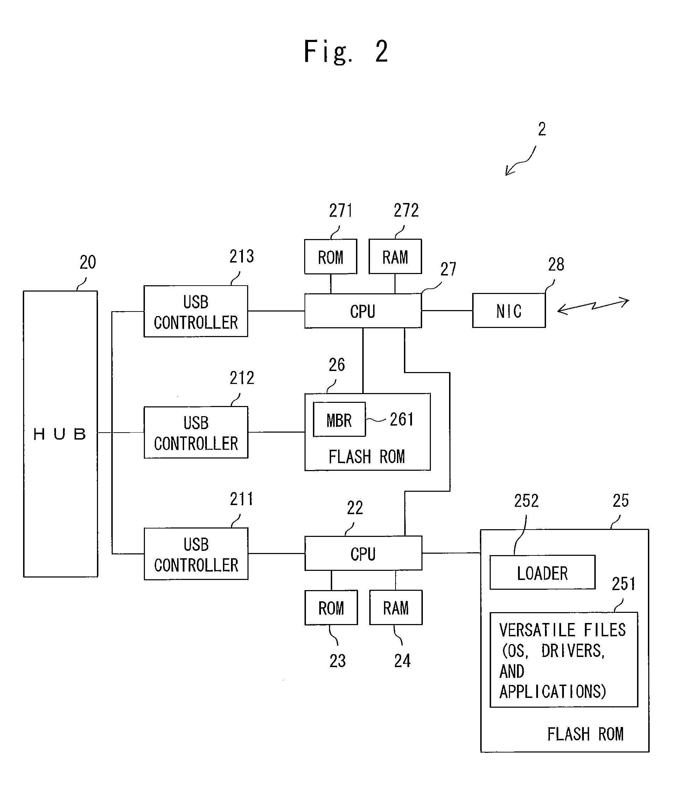

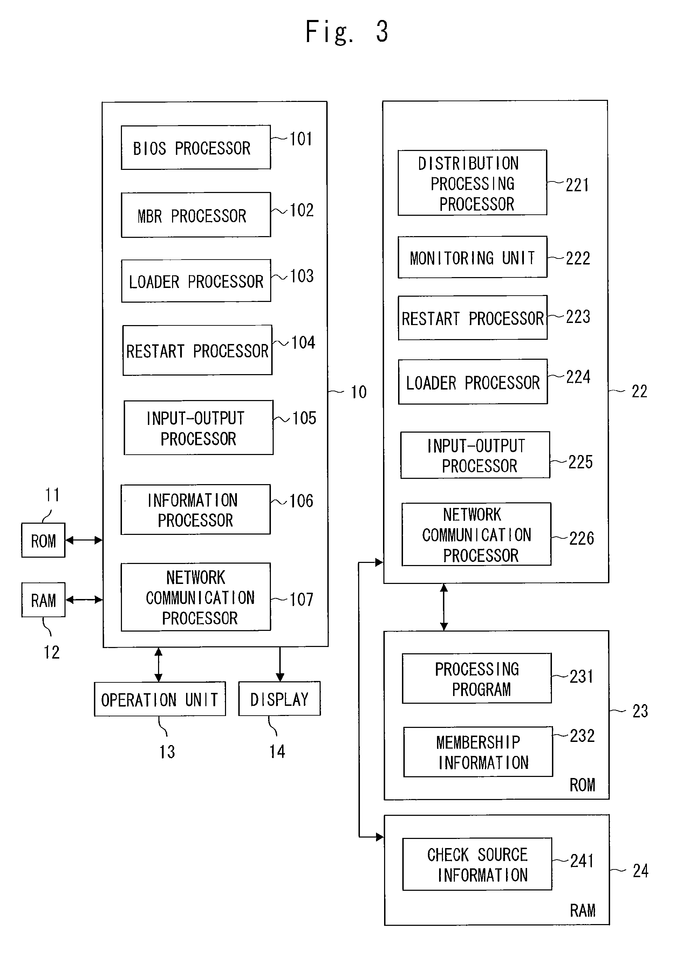

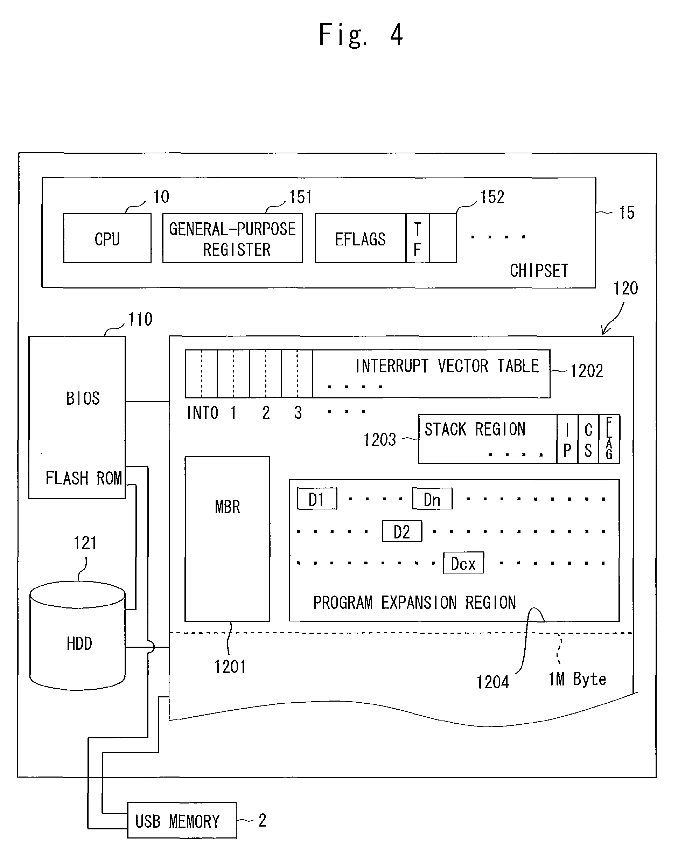

FIG. 1 diagrammatically illustrates a network communication system to which an external boot device of an embodiment of the present invention is applied. FIG. 2 is a block diagram illustrating an example of a hardware configuration of the external boot device of FIG. 1. FIG. 3 is a block diagram illustrating functional blocks related to the booting of a terminal and the external boot device. FIG. 4 illustrates a memory map of the terminal.

The network communication system of FIG. 1 includes terminals 1, each serving as an example of an information processing apparatus including, for example, a personal computer, USB (Universal Serial Bus) memory 2 connected to a terminal 1 as an example of an external boot device, and a network 3 such as the Internet. The terminal 1 is connected to the network 3 via a provider (ISP) 4. According to the embodiment, the terminal 1 is directly connected to the network 3, but if the USB memory 2 is mounted on the terminal 1, the terminal 1 is connected to the network 3 via the USB memory 2 as described below. A plurality of ISPs 4 are arranged on the network 3, and each ISP 4 is connected to one or a plurality of terminals 1 and an unillustrated Web site that provides a variety of information. Each person is supplied with the USB memory 2 if and when they are registered as a member authorized to receive a predetermined service via an operation on the terminal 1, for example. The USB memory 2 records information identifying each member and other information on an internal memory thereof. A structure and function of the USB memory 2 are described below.

The terminal 1 includes a computer and thus a CPU (Central Processing unit) 10 as control means as illustrated in FIG. 3. The CPU 10 is connected to a ROM (Read Only Memory) 11, and a RAM (Random Access Memory) 12. The ROM 11 may include a flash ROM that permits data to be rewritten. According the embodiment, the ROM 11 may include the flash ROM, a CMOS (Complementary Metal Oxide Semiconductor), and the like, and a BIOS (Basic Input/Output System) is written on the flash ROM 110 (see FIG. 4). If the BIOS is set to be rewritable, the priority order of reading of MBR (Master Boot Record) onto the memory at the startup may be set. As illustrated in FIG. 3, the CPU 10 is connected to an operation unit 13 and a display 14 to display an image. The operation unit 13 includes a keyboard having numeric keys, a mouse, and the like, to input a command and information needed by an operator. The display 14 is used to display a screen to verify input information and a screen to display communication contents. It is noted that the BIOS is so set in the embodiment that the USB memory 2 is specified with higher priority as the external boot device. The RAM 12 includes a startup memory region 120 serving as a work area at the startup, and a hard disk (HDD) 121 or the like serving as a work area when a standard process is performed, and storing necessary programs, and data and the like.

The terminal 1 includes a chipset 15 as illustrated in FIG. 4. The chipset 15 includes main component forming an unillustrated mother board, and controls exchange of data between the main component and a CPU, a variety of memories, a hard disk (HDD 121, see FIG. 4), an unillustrated CD-ROM, and the like connected to the mother board.

The network 3 is connected via the ISP 4 to one or a plurality of member servers 5, and a plurality of business partner terminals 6. The member server 5 stores appropriate information relating to a member who owns the terminal 1 or is eligible to control the terminal 1. For example, the member server 5 stores, on a per member basis, membership information, such as name, alias, e-mail address, and residential address of each member. The business partner terminal 6 performs a process responsive to a transaction request from each terminal 1, for example, a process for electronic settlement, and stores transaction information and performs information management. The member server 5 may store, in addition to the membership information, information that is supplied to the terminal 1 as necessary, and processing software needed to perform a service to be provided to the member. The processing software is a document creation program to create a necessary document, for example. Furthermore, the member server 5, if it has a high memory capacity, may additionally store (retain and manage) transaction contents and log information for each terminal 1.

The network communication system may be implemented in the following configuration. The terminal 1 may be an exclusive terminal that can be connected to an exclusive network only, or may be a general-purpose terminal that can be connected to another network switched from the Internet. The terminal 1, if it is a general-purpose terminal, stores a program file (referred to as a general AP (application program)) to perform general processes. The general AP creates, processes, and stores information using a typical software program for producing a document and drawings, and performs a typical process, such as transmitting and receiving information using a communication software program. The USB memory 2 stores a program file (referred to as a particular AP) which performs a process related to execution of a particular application software program. The general AP is enabled to be operative by an OS read by an original MBR and a loader of the terminal 1, and the particular AP is enabled to be operative by an OS read by an MBR and a loader of the USB memory 2 (or an MBR started up by a restart program). More specifically, after booting, the USB memory 2 loads, on the terminal 1 of each of a consumer, a store, and a company, as members, a software program as the particular AP that produces and communicates documents related to buying or selling of products and services, asking for cost estimate of and billing charge for products and services, and payment and money received (documents related to so-called business dealing). The USB memory 2 also loads on the terminal 1 a predetermined software program for an authentication process as necessary. More specifically, using the particular AP, the terminal 1 settles typical business transactions, for example, issues a bill from a store, receives a bill from a store, issues an instruction sheet to transfer money from a buyer to an account of an banking institution of a bill issuer (i.e., payment), issues a receipt of the money, and performs a transmission and reception process in a variety of digital documents of a business transaction regardless of whether the business transaction is performed in electronic settlement. The particular AP can produce a variety of documents in an electronic file in text format or binary format. The electronic files may be transmitted or received among the terminals 1 via the member server 5 (or among the terminals 1 and the member server 5 in parallel with the terminals 1), for example. Installed on the terminal 1 of each banking institution is a particular AP that performs a settlement instruction process (an instruction to perform a settlement process between the banking institutions and the like) in accordance with a banking settlement document from the terminal 1 of the consumer or the company. The terminal 1 is supplied with a respective USB memory 2 having unique information written thereon. Each member can enjoy service on condition that the member has successfully completed at least an authentication process of authenticity of the USB memory 2 with the USB memory 2 inserted in a USB port of the terminal 1, and more preferably, the member has also successfully completed a personal authentication process (authentication as an authorized user of the USB memory 2).

The member server 5 includes a storage unit that stores, for management purpose, file transmission and reception log of each member, and file, and the like of each member. The member server 5 may have an authentication function. In such a case, the authentication function may verify authenticity of each member by viewing a file, i.e., a packet transmitted and received between the member server 5 and the terminal 1.

The network communication system finds a variety of other applications. For example, the network communication system applies to an information communication and information management performed between organizations and the terminal 1 outside the organizations. Such organizations include public or semi-public organizations (including a private organization) (such as national and municipal bodies, associates, and unions), and create, store, and manage secret information. As information communication with a terminal outside the organization, the publication of the certificate, the transmission of the application are assumed, for example.

If a document file is transmitted or received in a packet formed in accordance with TCP/IP (transmission control protocol / internet protocol) standards, a received packet may be converted back into an original file or a file to be transmitted may be converted before being transmitted. Furthermore, a header of each packet to be transmitted includes a global IP address of the terminal 1 as a transmission source, and global IP addresses of another terminal as a transmission destination and the member server.

An unillustrated router is equipped on NIC (Network Interface Card) 28 of FIG. 2, or the router is serially connected to the NIC 28. The router sets address information (a routing table or an arp (Address Resolution Protocol) table). The address information determines whether address information indicating a transmission destination attached to a predetermined location of each packet as a transmission signal or a reception signal is a global IP address complying with standards of the Internet or a predetermined local IP address (MAC address). For example, the local IP address supports Ethernet (registered trademark) or the like for an exclusive network different from the global IP address in terms of attachment method (in a form discriminated from the global IP address). The packet is checked against the table, and is transmitted to only a route having an address matching the address of the packet. In this way, a transmission line is switched in a software fashion between the Internet or the exclusive network.

In FIG. 2, the USB memory 2 includes a mother board (not illustrated) in a casing having a generally rectangular parallelepiped configuration, and a variety of circuit elements and semiconductors are mounted on the mother board. The hub 20 is mounted at an input-output section of the USB memory 2 and connected to the terminal 1 via a USB port of the terminal 1 for communication with the terminal 1. The USB memory 2 has signal lines of a predetermined number for three signals for example, and USB controllers 21 (211, 212, and 213) are arranged at the input-output section of the USB memory 2. The USB controller 21 adjusts the level and the waveform shape of each input and output signals.

The USB controller 211 is connected to a CPU 22. The CPU 22 executes external booting and is connected to a ROM 23 storing a predetermined processing program for the external booting and a RAM 24 temporarily storing the content of a process of the CPU 22. The CPU 22 is also connected another ROM, i.e., a flash ROM 25 in the present embodiment. The flash ROM 25 includes a versatile file memory 251 and a loader memory 252. The versatile file memory 251 stores a program called a driver operating peripheral devices, and an OS. The loader memory 252 stores a loader that is a program loading the versatile file memory 251 to the terminal 1.

The USB controller 212 is connected to a ROM, i.e., a flash ROM 26 in the present embodiment. The flash ROM 26 includes a MBR memory 261 storing an MBR.

The USB controller 213 is connected to a CPU 27. The CPU 27 performs an information process when the CPU 27 communicates with another terminal 1 or the like via the network 3, and is connected to a ROM 271 storing a processing program for the information process and a RAM 272 temporarily storing the content of the process. As previously described, the NIC 28 managing connection with the network 3 is connected to a public communication line down to the ISP 4 via an unillustrated router, and controls communication with the line and the network 3. The CPU 27 is connected to the flash ROM 26 and can update the contents of the MBR memory 261 with the USB memory 2 connected to the terminal 1. The updating operation may be performed once each time the USB memory 2 is connected to the terminal 1 (it is not important whether the updating operation is performed prior to or subsequent to the booting). The CPU 27 sends an update request of the MBR to the member server 5. The CPU 27 receives via the NIC 28 a new MBR that the member server 5 has sent in response to the reception of the update request. The CPU 27 then updates the MBR on the MBR memory 261 with the received content.

The manner of the updating operation may include, in addition to updating the content, updating a cipher method at each request. More specifically, the member server 5 has a plurality of ciphering programs and a plurality of deciphering programs in preparation, and, at each request, ciphers the MBR with a ciphering program selected randomly or in accordance with a predetermined rule, and then transmits a deciphering program corresponding the ciphering program at the same time or a slightly shifted time. The CPU 27 then deciphers the MBR, and writes the deciphered MBR on the MBR memory 261 in an update fashion. In this way, the MBR is updated more frequently.

As illustrated in FIG. 3, the CPU 10 of the terminal 1 executes the program stored on the ROM 11 and the RAM 12. The CPU 10 of the terminal 1 thus functions as BIOS processor 101, MBR processor 102, loader processor 103, restart processor 104, input-output processor 105, information processor 106, and network communication processor 107. The BIOS processor 101 starts up the BIOS. The MBR processor 102 starts up the MBR. The loader processor 103 starts up the loader. The restart processor 104 performs a reboot if a fault occurs during the startup. The input-output processor 105 transmits information to or receives information from the USB memory 2. The information processor 106 creates a document or performs another process using the particular AP subsequent to the startup through the external booting or the general AP subsequent to the startup through the standard booting. The network communication processor 107 transmits information to or receives information from another terminal 1, the member server 5, and the business partner terminal 6 via the NIC and the network.

In response to power-on of the terminal 1, the BIOS processor 101 checks the statuses of the memories and the peripheral devices. The last portion of a BIOS program is an OS startup routine. The MBR is read in accordance with the BOIS routine. The MBR is written at a leading position that is set to start up in a boot order, i.e., with higher priority. If the USB memory 2 is mounted on the USB port, a master boot program (bootstrap loader) of the MBR is read onto to a work area at the startup of the RAM 12 with the priority order in accordance with the BIOS startup routine. The work area at the startup of the RAM 12 is a startup memory region having a predetermined memory capacity in 20-bit address line specifications, i.e., about 1 Mbytes. If the USB memory 2 is not mounted on the USB port, the BIOS processor 101 reads the program of the MBR from the HDD 121 in the priority order of high priority to low priority.

If the USB memory 2 is mounted on the USB port, the BIOS processor 101 reads the master boot program (bootstrap loader) from the MBR memory 261 of the USB memory 2 onto the startup memory region 120 of the RAM 12 in accordance with the BIOS startup routine. In normal operation, next, control is handed over to the read master boot program.

In accordance with the read master boot program, the MBR processor 102 checks a partition table of the loader memory 252 to search for an active basic partition, and reads a partition boot sector (PBS) at the leading position of the partition. The partition boot sector is created beforehand when the loader memory 252 is formatted by the OS. The partition boot sector stores a boot program (initial program loader: IPL) to startup the OS or the like installed on that partition and partition information of the boot program. In accordance with the master boot program, the MBR processor 102 reads the IPL, and then hands control over to the IPL. The IPL finds the loader to start up the OS or the like from the first basic partition of the loader memory 252, reads the loader onto the memory, and hands control over to the loader. It is noted here that this series of processes is performed by the MBR processor 102.

The loader is segmented into a plurality of loader segments. The MBR processor 102 requires mapping position information for the USB memory 2 in order to load each loader segment in a distribution fashion (mapping operation) on the startup memory region 120. The MBR processor 102 thus retrieves the mapping position information.

The MBR processor 102 performs a process to control the activities of malware. As illustrated in FIG. 4, the master boot program (i) stacks a stack region 1203 on a setting area of interrupt vector table 1202 created beforehand by the BIOS in the startup memory region 120 and (ii) sets a trap flag (TF) of an EFLAGS 152 in the chipset 15.

Using the loader, the loader processor 103 loads a file such as a driver needed to start up the OS and the like from the versatile file memory 251 to the startup memory region 120 of the RAM 12. It is noted that kernel such as the OS and the like is started up after a preparation operation to start up the OS and the like. The OS and the like start up, and then the loader having control handed over thereto reads the particular AP onto the RAM 12. A communication control program in the read particular AP performs a route setting on the router (not illustrated) to permit communication with the terminal 1 or the like of each member. Preferably, the particular AP loaded onto the terminal 1 or the CPU 22 of the USB memory 2 periodically checks whether the USB memory 2 is mounted on the terminal 1, and if and while the USB memory 2 is mounted the terminal 1, the above-described condition is maintained. Alternatively, the mounting is presumed to continue until a signal indicating that the USB memory 2 is pulled out after the startup is detected.

If a fault is detected during the startup from the BIOS, the terminal 1 determines that the possibility of the presence of malware is high, and the MBR processor 102 suspends the startup operation. If the startup operation is suspended in this way, the terminal 1 as a whole may not be started up, and each member is not provided with a use environment of the particular AP.

If a fault occurs in this way, the restart processor 104 directly reads the master boot program of the MBR from the MBR memory 261 and performs a restart process not via the BIOS.

In such a case, the master boot program of the MBR may be overwritten. However, preferably, the startup memory region 120 or the EFLAGS 152 discussed later (see FIG. 4) is initialized, followed by the reading of the master boot program of the MBR onto the startup memory region 120.

The input-output processor 105 transmits information to or receives information from the USB memory 2.

Next, the CPU 22 of FIG. 3 executes the program stored on the ROM 23. The CPU 22 thus functions as distribution processing processor 221, monitoring unit 222, restart processor 223, loader processor 224, input-output processor 225, and network communication processor 226. The distribution processing processor 221 performs the distribution arrangement (mapping operation) of the loader. The monitoring unit 222 monitors whether a fault occurs in the startup process. The restart processor 223 performs the restart process after the occurrence of a fault. The loader processor 224 reads the loader onto the terminal 1. The input-output processor 225 transmits information to or receives information from the terminal 1. The network communication processor 226 exchanges a file and the like created using the particular AP after the startup by the external booting with another terminal 1, the member server 5 and the business partner terminal 6 via the NIC 28 and the network 3.

The distribution processing processor 221 performs a segmentation process of segmenting the loader as a program into a predetermined number of loader segments, a process of storing on the RAM 24 the loader segment and the mapping information (the mapping position information DI on the startup memory region 120 and mapping order information CX (CX=1, 2,..., number of segments)) in association with each other, and a process of outputting the mapping information in response to a read request from the terminal 1. Association information between each loader segment and the mapping information (the mapping position information DI and the mapping order information CX on the startup memory region 120) stored on the RAM 24 is used as check source information in a monitoring process to be discussed later.

The monitoring unit 222 monitors on each mapping operation of the loader segment whether the mapping operation is normal or not. The monitoring unit 222 performs the monitoring operation by checking a difference between information transmitted as a mapping request from the terminal 1 and the check source information stored on the RAM 24. While the mapping operation is normal, the startup operation continues. If the monitoring unit 222 determines the mapping operation is not normal, the CPU 22 enters a restart process.

If the monitoring unit 222 determines that the mapping operation is not normal, or in response to a restart instruction from the terminal 1, the restart processor 223 directly reads the master boot program of the MBR from the MBR memory 261 and then outputs the read master boot program of the MBR to the startup memory region 120.

The loader processor 224 outputs the loader segment corresponding to segmentation information of the loader from the loader to the terminal 1.

The ROM 23 includes a processing program memory 231, and a membership information memory 232. The processing program memory 231 stores processing programs to cause the processors 221 through 226 to perform the processes thereof. The membership information memory 232 stores information identifying the member. The RAM 24 includes a check source information memory 241.

In this way, the CPU 22 is responsible for the read process to read the program file from the USB memory 2, and the CPU 10 of the terminal 1 is responsible for each process during the loading on the terminal 1 and each process subsequent to the loading on the terminal 1.

A memory map of FIG. 4 is described. The chipset 15 includes the CPU 10, and a variety of registers. For example, the registers include a general-purpose register 151 for temporarily storing process data, the EFLAGS 152 as a sort of status register of a value indicating an arithmetic status of the CPU 10, and other unillustrated registers. As illustrated in FIG. 4, the startup memory region 120 includes an expansion region 1201 (hereinafter referred to as MBR expansion region) of the master boot program of the MBR read from the USB memory 2, interrupt vector table 1202, stack region 1203, and program expansion region 1204 where the loader and the like are expanded.

The interrupt vector table 1202 refers to a correspondence table storing a leading address of a program that handles an interrupt if the interrupt occurs. A process responsive to the interrupt is performed in accordance with the contents of the table. The interrupt vector table 1202 includes a plurality of vectors, each composed of upper 16 bits and lower 16 bits. Each vector corresponds to a processing program. For example, a vector 0 is INTO for performing an interrupt from the outside, a vector 1 is INT1, a vector 2 is INT2, and furthermore, a vector 6 is an invalid Opcode. An address serving as a shifting destination in the occurrence of an interrupt, i.e., an address where a program to be executed is written is written on a vector region of an INT instruction. An address to execute a process of the invalid Opcode is written on the vector 6. Written on the position of the address in the present embodiment is a program that outputs a restart instruction signal to the USB memory 2.

The stack region 1203 serves as a memory area that is used to temporarily save the contents of the register of the CPU 10 in an interrupt process or the like. The stack region 1203 has a stack length enough to store a plurality of contents. Each content can be written by 16 bits. The stack region 1203 has a size of 0 at the initial state thereof, and is defined by a fixed base (base pointer BP) on the memory, and a reference position (stack pointer) presents at a forward point separated in response to writing (in the direction to a smaller address). If the CPU 10 shifts into the single step mode with the trap flag TF of the EFLAGS 152 set, the stack region 1203 temporarily saves, in 16 bits, EFLAG related to the content of the instruction immediately prior to the interrupt, the content of the program, and the addresses thereof (EFLAG, CS, and IP). In the embodiment, written EFLAG, CS, and IP are not accumulated, and each time, writing is performed starting at the base pointer BP. This process is described in detail below.

The program expansion region 1204 is a memory area where the loader is mapped. More specifically, the program expansion region 1204 is the startup memory region 120 in the RAM 12, but without the regions 1201 through 1203. The loader segments are distributedly arranged (expanded) by a segmentation number, for example, as denoted by R1, R2, ..., Rn, ..., Rcx in accordance with the mapping position information DI in FIG. 4. In one embodiment, dummy data of an appropriate number may be included in loader segments. In such a case, the distribution processing processor 221 sets the mapping position information DI and the mapping order information CX including the dummy data as well. The loader segment includes the next mapping position information DI written on last bit position, for example, and by referencing the information DI successively, the original loader is synthesized after loading. In such a case, if the dummy data include information that data are the dummy data, the dummy data may be removed in the synthesis operation of the loader segments.

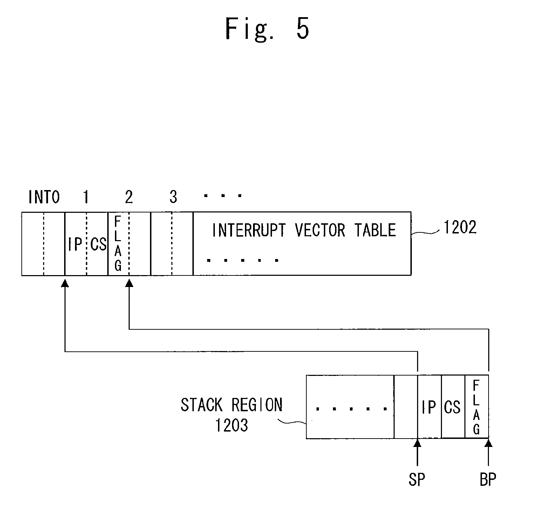

FIG. 5 illustrates a method of stacking the stack region 1203 onto the interrupt vector table 1202. EFLAG, CS, and IP related to the instruction content immediately prior to the interrupt are written on the stack region 1203, starting at the base pointer BP. As represented by an arrow, the stack region 1203 is position-aligned so that the position of the base pointer BP registers with the position of the upper bit of the vector 2 of the interrupt vector table 1202. Therefore, the writing of EFLAG, CS, and IP of the stack region 1203 is performed in a manner such that FLAG is written on the upper bit of the vector 2, CS is written on the lower bit of the vector 1, and IP is written on the upper bit of the vector 1 on the interrupt vector table 1202 as illustrated in FIG. 5. On the other hand, since the vector 1 indicates an address serving as an external interrupt destination, the CPU 10 references the vector 1 in response to the generation of the interrupt. Then, if control is handed over to the program of the address that is written on the vector 1, EFLAG, CS, and IP as an immediately preceding content are saved and written on the stack region 1203. More specifically, address information of IP and CS is written on the vector 1 of the interrupt vector table 1202. IP is written on the upper bit of the vector 1, and CS is written on the lower bit of the vector 1. In other words, the address is IPx16 + CS.

It is now assumed that malware hides in the BIOS (invades from the outside during the startup of the BIOS), that the malware becomes active during the startup of the BIOS, that the flag TF of the EFLAGS 152 is set, and that the address where the virus body is present is written on the vector 1 of the interrupt vector table 1202. It is now assumed that subsequent to the startup of the BIOS, typically, during the startup of the MBR, a given instruction is executed, and control of the CPU 10 is captured by the malware (a debug interrupt may be caused by the malware). At this point of time, control is shifted to the address written on the vector 1, and an action may be performed by the malware (replicating the malware itself, data tampering, data destruction, and other actions). On the other hand, with the malware interrupting, information IP and CS, out of the preceding instruction content, is written on the stack region 1203, i.e., the vector 1 of the interrupt vector table 1202. The address indicating the storage location of the malware originally written on the vector 1 is deleted. More specifically, once the malware, which has invaded during the startup of the BIOS, takes any action after the startup of the MBR, the malware is obliged to lose the address as the hiding place thereof. The activities of the malware thereafter is controlled.

An example of the master boot program of the MBR is described here. The master boot program:
(1) sets an address to be written in at the vector 6 of the interrupt vector table 1202 on an address where the program of the restart process is written,

(2) sets (stacks) the stack region 1203 on the vector 1 and upper addresses of the vector 2 of the interrupt vector table 1202,

(3) then, outputs a data request of the next loader segment to the USB memory 2,

(4) retrieves the loader segment from the USB memory 2, and

(5) maps the retrieved loader segment to the startup memory region 120.

In response to a LOOP instruction, operations (3) through (5) are repeated until the loading of all the loader segments is complete.

Through operations (1) and (2), the following process may be performed when a debug exception is caused by malware next time. More specifically, if a debug exception is caused by malware, the address of the vector 1 is overwritten with stacked information, and an unintended address (=IPx16+CS) is set. The malware ends an action, control is transferred to the rewritten address of the vector 1 (IPx16+CS), and an exception of the invalid Opcode is generated. Then, control is transferred to the vector 6 that defines invalid Opcode exception. Since control is transferred to the restart process program of the address set on the vector 6, a restart instruction is thus issued. In this way, once a debug exception is caused by the malware, the address defining the location of the malware becomes nonexistent, and the activities of the malware are controlled. Since the detection of the fault triggers the restart process, the malware itself can be deleted.

In succession, the master boot program
(6) sets the trap flag TF. More specifically, 1 is set on the trap flag TF in the EFLAGS 152 of the chipset 15. By setting the trap flag TF, a debug exception occurs when a next assembler instruction is executed.

The master boot program
(7) sets an optional address on the stack region 1203 in response to a shift (jump) instruction. Control is handed over from the address IP:CS to the loader.

The jump instruction is an instruction to set an address IP (an address scheduled to be executed next). Since the trap flag TF is set in operation (6), a stack is stacked on the stack region 1203 in response to the jump instruction. The stacked contents includes "IP," "CS," and "FLAGS." Since the address indicated by the stacked IP:CS is the vector 1 (a vector when a debug exception occurs), the set IP:CS is handled as the address of the vector 1.

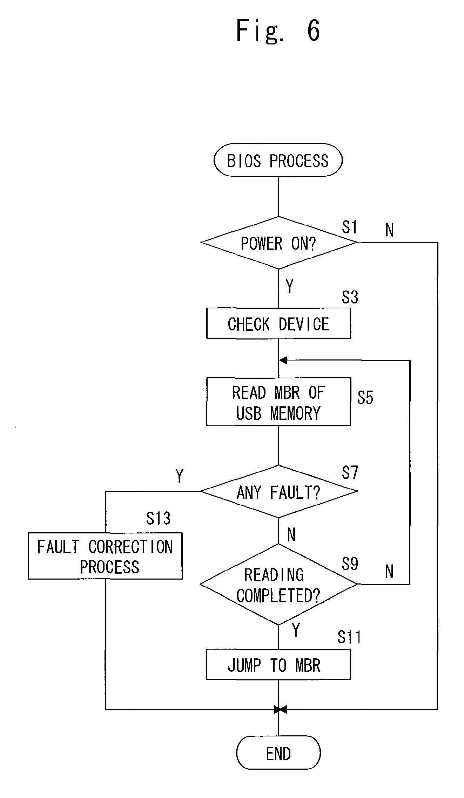

Next, a boot process to be performed by the CPU 10 and the CPU 22 is described with reference to FIGS. 6 through 11. FIG. 6 is a flowchart illustrating a procedure of a startup process of the BOIS performed by the CPU 10 of the terminal 1. First, the terminal 1 is powered on (step S1). More specifically, when a clock generator on the mother board starts outputting a clock pulse in response to supplied power, the CPU 10 checks devices including memories and peripheral devices (step S3). Next, the CPU 10 determines whether the USB memory 2 is mounted on the USB port by using the transmission or reception of a known handshake signal.

The following discussion is based on the premise that the USB memory 2 is mounted on the USB port of the terminal 1. More specifically, if the USB memory 2 is mounted on the USB port, the master boot program of the MBR is read onto the startup memory region 120 of the RAM 12 in the priority order in accordance with the BIOS startup routine (step S5).

The terminal 1 then determines whether a fault is present or not (step S7). The fault refers to an action that malware or the like takes during the reading of the master boot program of the MBR. If no fault is found, the CPU 10 determines whether the reading of the master boot program of the MBR has been completed (step S9). If the reading has been completed, control is handed over to the master boot program of the MBR (step S11). On the other hand, if the reading has not been completed, the CPU 10 returns to step S5 to repeat the same operations. If the CPU 10 determines in step S7 that a fault is found, a fault countermeasure process responsive to the fault is performed (step S13).

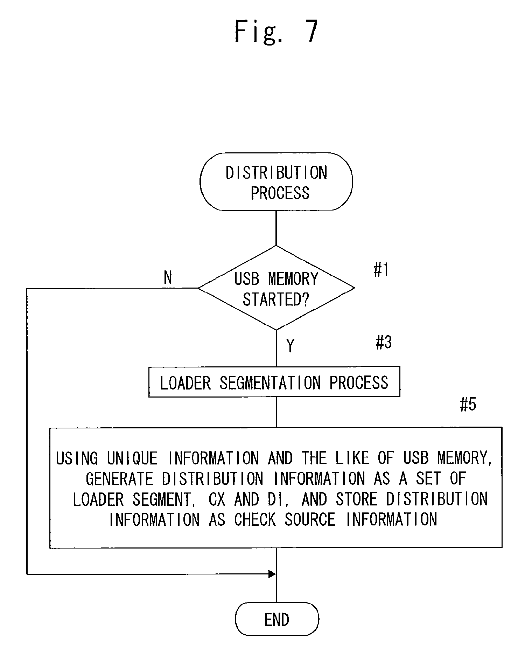

FIG. 7 is a flowchart illustrating a procedure of a distribution process of the loader executed by the CPU 22 of the USB memory 2. The USB memory 2 is supplied with power via the USB port of the terminal 1, and the CPU 22 determines whether the USB memory 2 has started or not (step #1). In one embodiment, the CPU 22 may perform the determination thereof by detecting the generation of the clock pulse from the unillustrated clock generator.

Upon determining that the USB memory 2 has started, the CPU 22 performs a segmentation process of the loader (step #3). The segmentation process of the loader includes an operation of segmenting the loader as a program into loader segments of the specific number in accordance with the membership information written on the membership information memory 232 of the USB memory 2 as the unique information, an operation of setting the mapping order information CX indicating the reading order of the loader segments and the address (the mapping position information) DI on the startup memory region 120 of the RAM 12, and an operation of storing the mapping order information CX and the mapping position information DI in an associated state on the check source information memory 241. It is noted that dummy data prepared beforehand may be mixed with the mapping order information CX and the mapping position information DI in the middle of the process.

Each time the terminal 1 is powered on with the USB memory 2 mounted on the terminal 1, the content of the distribution process of the loader is varied using the unique information. Secrecy is increased more than when the content of the distribution process of the loader remains fixed. The distribution processing method of the loader may be set in accordance with a predetermined rule accounting for various factors such as time and date information of the startup, and the number of startups, in addition to the unique information. Alternatively, the distribution processing method may be set randomly making use of a random number or the like generated by a random number generator. A mapping region is set on the startup memory region 120 in view of a data length so that the loader segments do not overlap each other even partially on the startup memory region 120.

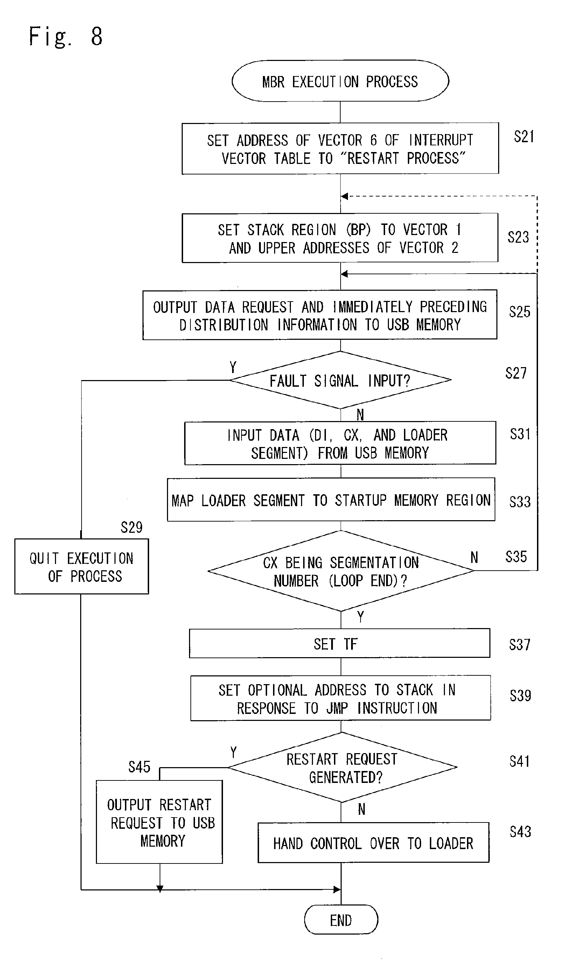

FIG. 8 is a flowchart illustrating a procedure of an execution process of the MBR executed by the CPU 10 of the terminal 1. The CPU 10 sets the address information where a program of a "reset process" was written as address written on the vector 6 of the interrupt vector table (indicating a transfer destination) (step S21). Then, the CPU 10 sets the address (the base pointer BP) of the stack region 1203 on the startup memory region 120 so that the base pointer BP is aligned with the upper address of the vector 2 (step S23).

A data request or the like is output to the USB memory 2 (step S25). On each of the distribution processing operations subsequent to a second distribution processing operation, immediately preceding distribution information is sent back together with the data request to the USB memory 2. The USB memory 2 then determines whether the received distribution information is different from the check source information stored on the check source information memory 241. If the received distribution information is different from the check source information, a fault signal is output to the terminal 1.

Upon receiving the fault signal from the USB memory 2 (Y from step S27), the CPU 10 quits executing the processing of the loader (step S29).

If the CPU 10 receives, instead of the fault signal, the loader segments, the mapping position information DI of the loader segments, and the mapping order information CX (CX=1 if the first loading) (step S31) from the USB memory 2, the CPU 10 loads (maps) the loader segments to the address DI on the startup memory region 120 (step S33). In each loading of the loader segment, the CPU 10 determines whether the mapping order information CX has reached the segmentation number at the distribution process (step S35). If the mapping order information CX has not reached the segmentation number, the CPU 10 returns to step S25 to repeat the LOOP instruction. The CPU 10 then repeats an input process of the loader segments in a similar way. If the CPU 10 determines that the LOOP instruction has been executed, the trap flag FT is set (step S37). Next, an optional address is set on the stack region in response to a jump instruction (step S39). The CPU 10 then determines whether a restart request is generated (step S41). If no restart request is generated, control is handed over to the read loader (step S43). On the other hand, if a restart request is generated, the CPU 10 outputs the restart request to the USB memory 2 (step S45).

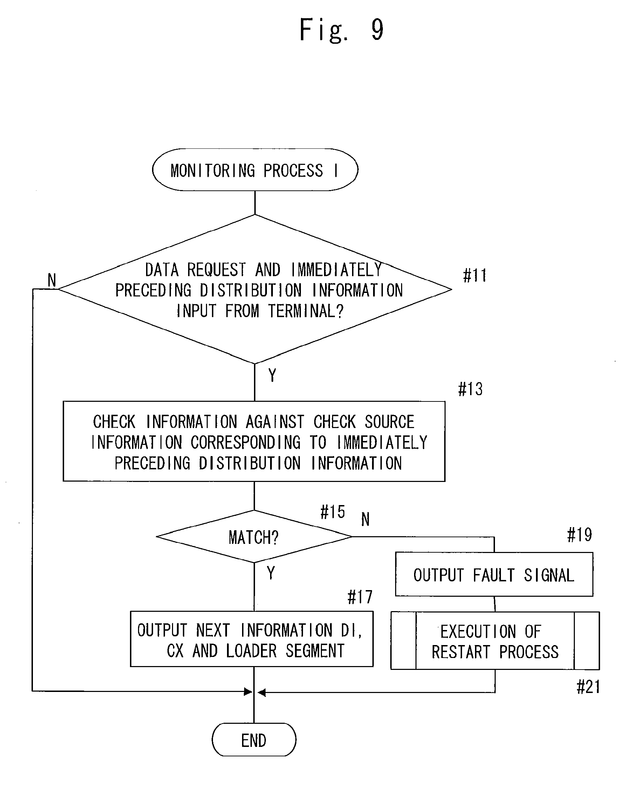

FIG. 9 is a flowchart illustrating a procedure of a monitoring process executed by the CPU 22 of the USB memory 2. First, the CPU 22 determines whether the USB memory 2 has received from the terminal 1 the data request and the immediately preceding distribution information (step #11). If the USB memory 2 has not received the data request and the immediately preceding distribution information, the CPU 22 exits the flow of the process. If the USB memory 2 has received the data request and the immediately preceding distribution information, the CPU 22 checks the immediately preceding distribution information against the check source information (step #13). If check results indicate a match (Y from step #15), the CPU 22 outputs to the terminal 1 the next mapping position information DI, the mapping order information CX, and the corresponding loader segment (step #17). On the other hand, if the check results indicate no match, the fault signal is output to the terminal 1 (step #19). The CPU 22 then performs a restart process (step #21).

The restart process refers to a process in which if the actual mapping position of the loader segment fails to match the check source information during the MBR startup, the CPU 22 determines that the cause is related to malware as described below, quits the startup of the current MBR, reads the master boot program of the MBR from the MBR memory 261, and then executes the master boot program not via the BIOS.

A debug interrupt may now be caused by malware in the mapping process of a given loader segment to the startup memory region 120. In such a case, an address where an instruction to be executed by the CPU 10 is written may be determined as an address where the malware is written. The address related to the malware is different from the mapping position information DI of the loader segment. The mapping position information DI returned from the terminal 1 distinctly fails to match the check source information. When the monitoring unit 222 detects no match between the information from the terminal 1 and the check source information, the CPU 22 determines that malware is present in the RAM 12, and instructs the master boot program of the MBR to start up not via the BIOS.

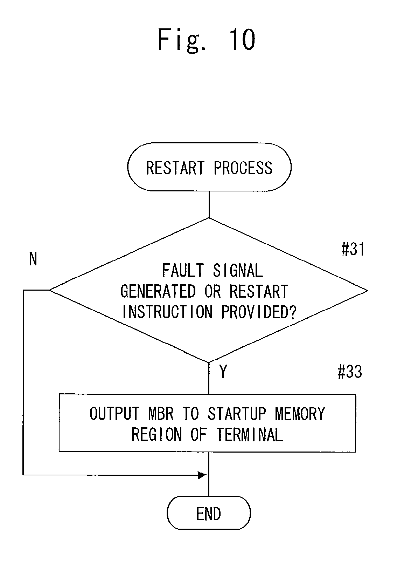

FIG. 10 is a flowchart illustrating a procedure of the restart process executed by the CPU 22 of the USB memory 2. The CPU 22 determines whether the fault signal or the restart instruction is generated (step #31). If neither of the fault signal and the restart instruction is present, the CPU 22 exits the flow of the process. On the other hand, if one of the fault signal and the restart instruction is generated, the CPU 22 reads the master boot program of the MBR from the MBR memory 261 and then outputs the master boot program of the MBR to the RAM 12 of the terminal 1 (step #33) .

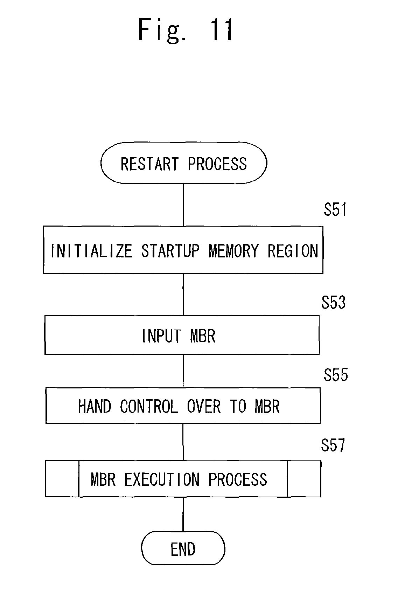

FIG. 11 is a flowchart illustrating a procedure of the restart process executed by the CPU 10 of the terminal 1. When the master boot program of the MBR restarts, the CPU 10 first initializes the startup memory region 120 (step S51). In this way even if malware is present, the malware is deleted.

The master boot program of the MBR is then written on the startup memory region 120 (step S53). When the writing is complete, control is handed over to the MBR (step S55). The MBR of FIG. 8 is then executed (step S57).

The present invention may be implemented in the following embodiments.

(1) According to the present embodiment, the USB is used for the external device. The present invention is not limited to the USB. Any device may be used as the external device as long as the device includes a CPU, a ROM, and a RAM. For example, the external device may be an IC card or may be implemented in a form built into a portable communication device.

(2) The master boot program of the MBR to be read in the restart may be the same as or different from the program that is read in response to the BIOS startup. For example, in one embodiment, a memory storing the restart MBR may be arranged in addition to the MBR memory 261. The restart MBR may generate the loader segment in accordance with a predetermined rule. Alternatively, the loader may be loaded in a batch without being segmented.

(3) According to the present invention, a single LOOP process is performed in the single step mode based on the trap flag TF. The number of LOOP operations is not limited to one. The LOOP process may be divided into a plurality of operations and then performed in view of the data length of the loader. The data of FLAG, CS, and IP written on the stack region 1203 are updated at the end of the LOOP process. If the data are written on predetermined bits of the stack region 1203, the loader may be loaded to the startup memory region 120 using an instruction other than the LOOP instruction, for example, using a REP (repeat) instruction in one embodiment, or may be loaded to the startup memory region 120 using DMAC (direct memory access controller) in another embodiment.

(4) According to the present embodiment, the loader segments are distributedly arranged on the RAM 12 using DI and CX. Alternatively, the arrangement order of the loader segments is set, and each loader segment may be read in succession by predetermined addresses of the RAM 12. In this way, a different segmentation number of the loader and a different arrangement order are used. Since the read start address is appropriately modified or updated, the loader segments are distributedly arranged in another embodiment.

As described above, the present invention relates to an external boot device mounted on an information processing apparatus including a CPU to boot up the information processing apparatus. The external boot device preferably includes storage means that stores MBR, the MBR being set to start up with higher priority by BIOS of the information processing apparatus, reading a loader, and mapping the loader to a startup memory region of the information processing apparatus, the MBR having a program that position-aligns a stack region in a predetermined stack relationship with an interrupt vector table set in the startup memory region of the information processing apparatus, and distribution processing means that, prior to a startup of the MBR, segments the loader into loader segments of a predetermined number, and generates mapping information in accordance with which the loader segments are loaded to the startup memory region.

With this arrangement, the stack region is stacked on the interrupt vector table, and the TF is set to be on to record immediately preceding information on the stack region. In this way, if malware becomes operative, information on the stack region is immediately updated in an update manner such that the content of the interrupt vector table is updated. The updating of the information on the stack region, i.e., the rewriting of the content of the interrupt vector table removes hiding place information of the body of the malware, and the activities of the malware is fully controlled. In this way, the external booting controls the activities of the virus.

In the external boot device, the predetermined stack relationship preferably aligns a base stack position of the stack region with a position of an upper bit of INT2 of the vector table. With this arrangement, the information CS, IP, and the like written on the stack region is written on INT2 and INT1 of the vector table. Even if an interrupt is generated by malware, location information of the malware is lost as a result of the writing. The malware is thus disabled.

In the external boot device, the MBR preferably position-aligns the stack region before the loader segments are loaded. With this arrangement, the position of the stack region is set in the beginning of the startup of the MBR, and subsequent actions of the malware are disabled in response to the operation of the malware.

In the external boot device, the distribution processing means preferably loads the loader to the startup memory region by a predetermined number of times per loop instruction in response to a loop instruction. With this arrangement, the loader is distributedly arranged, and it is difficult to interrupt and control the mapping operation of the loader segments which are distributedly arranged.

In the external boot device, the MBR preferably position-aligns the stack region prior to the execution of a first loop instruction. With this arrangement, the position of the stack region is set in the beginning of the startup of the MBR, and subsequent actions of the malware are disabled in response to the operation of the malware.

In the external boot device, the distribution processing means preferably makes the mapping information of the startup memory region different on a per boot basis. With this arrangement, the mapping position of the loader segment changes each time, thereby introducing a determination step in the interrupt of the malware. The interrupt operation is thus difficult to perform.

The external boot device preferably includes unique information storage means that store unique information, wherein the distribution processing means generates the mapping information using the unique information. With this arrangement, the mapping content unique to each external boot device may be set.

The external boot device preferably includes monitoring means that monitors whether a fault occurs in a startup operation of the MBR, and restart means that, if the fault is detected, reads the MBR onto the startup memory region of the information processing apparatus. With this arrangement, if a fault such as malware is detected, the information processing apparatus is started not via the BIOS. The malware related to the BIOS is excluded from the startup memory region in the restart.

A network communication system preferably includes the external boot device, and a plurality of the information processing apparatuses connected to a network via the external boot device in a manner that allows communication between the information processing apparatuses and the network. With this arrangement, information communication is established between the external boot device and the information processing apparatus via the network under high-security environment free from the effect of malware.

### Reference Signs List

1 Terminal (information processing apparatus)
- 10 and 22: CPUs
- 11: ROM
- 12: RAM
- 101: BIOS processor
- 102: MBR processor
- 103: Loader processor
- 104: Restart processor
- 105: Input-output processor
- 110: Flash ROM
- 12: RAM
- 120: Startup memory region
- 1201: MBR expansion region
- 1202: Interrupt vector table
- 1203: Stack region
- 1204: Program expansion region
- 121: HDD
- 15: Chipset
- 2: USB memory (external boot device)
- 221: Distribution processing processor (distribution processing means)
- 222: Monitoring unit (monitoring means)
- 223: Restart processor (restart means)
- 224: Loader processor
- 225: Input-output processor
- 23: ROM
- 231: Processing program memory
- 232: Membership information memory
- 24: RAM
- 241: Check source information memory
- 251: Versatile file memory
- 252: Loader memory
- 261: MBR memory (storage means)
- 3: Network

## Claims

1. An external boot device mounted on an information processing apparatus including a CPU to boot up the information processing apparatus, comprising:
storage means that stores MBR, the MBR being set to start up with higher priority by BIOS of the information processing apparatus, reading a loader, and mapping the loader to a startup memory region of the information processing apparatus, the MBR having a program that position-aligns a stack region in a predetermined stack relationship with an interrupt vector table set in the startup memory region of the information processing apparatus, and
distribution processing means that, prior to a startup of the MBR, segments the loader into loader segments of a predetermined number, and generates mapping information in accordance with which the loader segments are loaded to the startup memory region.

2. The external boot device according to Claim 1, wherein the predetermined stack relationship aligns a base stack position of the stack region with a position of an upper bit of INT2 of the vector table.

3. The external boot device according to one of Claims 1 and 2, wherein the MBR position-aligns the stack region before the loader segments are loaded.

4. The external boot device according to one of Claims 1 through 3, wherein the distribution processing means loads the loader to the startup memory region by a predetermined number of times per loop instruction in response to a loop instruction.

5. The external boot device according to Claim 4, wherein the MBR position-aligns the stack region prior to the execution of a first loop instruction.

6. The external boot device according to one of Claims 1 through 5, wherein the distribution processing means makes the mapping information of the startup memory region different on a per boot basis.

7. The external boot device according to Claim 6, comprising unique information storage means that store unique information,
wherein the distribution processing means generates the mapping information using the unique information.

8. The external boot device according to one of Claims 1 through 6, comprising:
monitoring means that monitors whether a fault occurs in a startup operation of the MBR, and
restart means that, if the fault is detected, reads the MBR onto the startup memory region of the information processing apparatus.

9. A network communication system comprising the external boot device according to one of Claims 1 through 8, and a plurality of the information processing apparatuses connected to a network via the external boot device in a manner that allows communication between the information processing apparatuses and the network.

10. An external boot program of an external boot device including a computer and mounted on an information processing apparatus including a CPU to boot up the information processing apparatus, the external boot program causing the computer operate as:
storage means that stores MBR, the MBR being set to start up with higher priority by BIOS of the information processing apparatus, reading a loader, and mapping the loader to a startup memory region of the information processing apparatus, the MBR having a program that position-aligns a stack region in a predetermined stack relationship with an interrupt vector table set in the startup memory region of the information processing apparatus, and
distribution processing means that, prior to a startup of the MBR, segments the loader into loader segments of a predetermined number, and generates mapping information in accordance with which the loader segments are loaded to the startup memory region.

11. The external boot program according to Claim 10, wherein the predetermined stack relationship aligns a base stack position of the stack region with a position of an upper bit of INT2 of the vector table.

12. The external boot program according to one of Claims 10 and 11, causing the computer to operate as:
monitoring means that monitors whether a fault occurs in a startup operation of the MBR, and
restart means that, if the fault is detected, reads the MBR onto the startup memory region of the information processing apparatus.

13. An external boot method of an external boot device mounted on an information processing apparatus including a CPU to boot up the information processing apparatus, comprising:
storing MBR on storage means, the MBR being set to start up with higher priority by BIOS of the information processing apparatus, reading a loader, and mapping the loader to a startup memory region of the information processing apparatus, the MBR having a program that position-aligns a stack region in a predetermined stack relationship with an interrupt vector table set in the startup memory region of the information processing apparatus, and
with distribution processing means, segmenting, prior to a startup of the MBR, the loader into loader segments of a predetermined number, and generating mapping information in accordance with which the loader segments are loaded to the startup memory region.

14. The external boot method according to Claim 13, wherein the predetermined stack relationship aligns a base stack position of the stack region with a position of an upper bit of INT2 of the vector table.

15. The external boot method according to one of Claims 13 and 14, comprising:
monitoring with monitoring means whether a fault occurs in a startup operation of the MBR, and
reading with restart means, if the fault is detected, the MBR onto the startup memory region of the information processing apparatus.
